Europäisches Patentamt

European Patent Office

Office européen des brevets

(19)

(11)     EP 1 337 024 B1

(12)     **EUROPÄISCHE PATENTSCHRIFT**

(45) Veröffentlichungstag und Bekanntmachung des
Hinweises auf die Patenterteilung:
**04.10.2006  Patentblatt 2006/40**

(51) Int Cl.:
*H02H 7/26* (2006.01)          *H02H 1/00* (2006.01)

(21) Anmeldenummer: **02405115.3**

(22) Anmeldetag: **14.02.2002**

(54) **Detektion eines Ruhesignals in einem Fernauslösegerät**

Detection of a quiescent state signal in a remotely controlled trip device

Détection d'un signal de repos dans un dispositif de déclenchement à télécommande

(84) Benannte Vertragsstaaten:
**DE ES IT**

(43) Veröffentlichungstag der Anmeldung:
**20.08.2003  Patentblatt 2003/34**

(73) Patentinhaber: **ABB Schweiz AG**
**5400 Baden (CH)**

(72) Erfinder: **Benninger, Hans**
**5300 Ennetturgi (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(56) Entgegenhaltungen:
**US-A- 3 626 297          US-A- 4 056 838**
**US-A- 4 112 476**

**Beschreibung**

Technisches Gebiet

Die Erfindung bezieht sich auf das Gebiet der Schutztechnik für Hoch- und Mittelspannungsnetze. Sie bezieht sich auf ein Verfahren und einen Empfänger zur Detektion eines Ruhesignals in einem Fernauslösegerät gemäss dem Oberbegriff der Patentansprüche 1 und 6.

Stand der Technik

Fernauslösegeräte dienen zur Übertragung von Schutz- oder Schaltbefehlen für elektrische Hoch- und Mittelspannungsnetze sowie -anlagen. Schutzbefehle bewirken beispielsweise eine direkte oder indirekte Öffnung eines Schutzschalters und dadurch eine elektrische Abtrennung eines Teiles des Netzes oder der Anlage. Andere Schutzbefehle bewirken umgekehrt eine Blockierung der Öffnung eines Schutzschalters. Schutzbefehle müssen beispielsweise von einem Abschnitt einer Hochspannungsleitung zu einem anderen übertragen werden. Dazu erzeugt ein Sender in einem Fernauslösegerät entsprechend den Schutzbefehlen analoge Signale, die über eine Signalverbindung übertragen werden. Ein Empfänger in einem anderen Fernauslösegerät detektiert die übertragenen Signale und bestimmt die entsprechenden Werte der Schutzbefehle.

Die analogen Signale liegen beispielsweise in einem Frequenzbereich zwischen 0.3 und 4 kHz. Sie werden entweder direkt in diesem Frequenzbereich übertragen, oder auf eine Trägerfrequenz moduliert und vor dem Empfänger demoduliert, oder über einen digitalen Kanal transparent übertragen und vor dem Empfänger rekonstruiert. In jedem Fall liegt am Empfänger ein analoges, Empfangssignal an, bei dem ein Vorhandensein von einzelnen Signalen unterschiedlicher Frequenz detektiert werden muss.

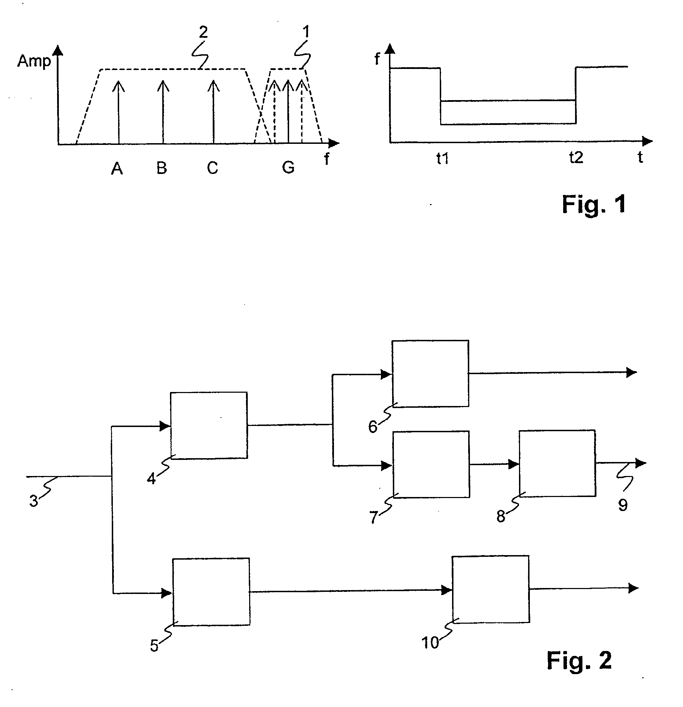

Figur 1 zeigt beispielhaft ein Ruhesignal und mehrere Befehlssignale im Frequenzbereich und im Zeitbereich für eine Übertragung von Befehlssignalen A,B,C, welche zu übertragenden Schutzbefehlen oder Kombinationen von Schutzbefehlen entsprechen. Eine Amplitudenachse der Darstellung ist mit Amp bezeichnet, eine Frequenzachse mit f und eine Zeitachse mit t. Die übermittelten Signale sind vorzugsweise sinusförmig und weisen jeweils einen Frequenzabstand zueinander von beispielsweise 100 Hz bis 300 Hz auf. In einem Ruhefall, das heisst, wenn kein Schutzbefehl übertragen wird, wird stattdessen kontinuierlich ein Ruhesignal oder Guardsignal G gesendet. In einem Befehlsfall zwischen Zeitpunkten t1 und t2 werden ein oder mehrere Befehlssignale übertragen, in Figur 1 ist im rechten Koordinatensystem beispielhaft das Senden von Signalen auf zwei Frequenzen dargestellt. Der Empfänger detektiert ein Vorhandensein respektive eine Abwesenheit der Befehlssignale und des Ruhesignals G fortwährend und erzeugt bei ungenügender Signalqualität oder falls gar kein Signal empfangen wird, ein Alarmsignal.

Das Ruhesignal G dient einer Erhöhung der Sicherheit, indem es anzeigt, dass kein Befehlssignal A,B,C vorliegt. Ein Befehlssignal gilt erst als empfangen, wenn das Ruhesignal G nicht mehr detektiert wird. Es ist also unter anderem eine möglichst schnelle Detektion der Anwesenheit respektive Abwesenheit des Ruhesignals G gefordert.

Figur 2 zeigt ein Signalflussbild einer Auswertung von Schutzsignalen mit einem Empfänger gemäss dem Stand der Technik. Aus einem Empfangssignaleingang 3 wird mittels eines ersten Bandpassfilters 4 der Signalanteil mit dem Ruhesignal G und mittels eines zweiten Bandpassfilters 5 der Signalanteil mit den Befehlssignalen A,B,C herausgefiltert. Das erste Bandpassfilter 4 weist, wie in Figur 1 schematisch gezeigt, eine erste Durchlasscharakteristik 1 auf, und das zweite Bandpassfilter 5 eine zweite Durchlasscharakteristik 2. Aus dem Ausgang des zweiten Bandpassfilters 5 wird mittels eines Befehlsdetektors 10 detektiert, ob und welche Befehlssignale A,B,C vorliegen. Aus dem Ausgang des ersten Bandpassfilters 4 werden Betriebsdaten mittels eines Datendecoders 6 ermittelt. Diese Betriebsdaten sind nicht zeitkritische Informationen, die zwischen Fernauslösegeräten ausgetauscht werden, beispielsweise Statusinformationen, Messwerte und Konfigurationsparameter. Die Betriebsdaten werden im Sender im Ruhezustand dem Ruhesignal G aufmoduliert. Dies geschieht beispielsweise durch Frequenzumtastung oder alternativ durch Phasenumtastung des Ruhesignals G. In beiden Fällen variiert die Frequenz des Ruhesignals G um eine Nominalfrequenz des Ruhesignals. Die Abweichung ist in Figur 1 durch gestrichelte Pfeile dargestellt. Die erste Durchlasscharakteristik 1 umfasst natürlich diese abweichenden Frequenzen.

Aus dem Ausgang des ersten Bandpassfilters 4 muss auch das Vorhandensein des Ruhesignals G ermittelt werden. Um einen Einfluss der Frequenzabweichungen aufgrund der Modulation des Ruhesignals zu eliminieren, wird mit einem Gleichrichter 7 eine Enveloppe des Ausgangssignals des ersten Bandpassfilters 4 bestimmt. Die tiefpassgefilterte Enveloppe wird in einem Komparator 8 mit einem Schwellwert verglichen und dementsprechend an einem Ruhesignalausgang 9 eine Abwesenheit oder ein Vorhandensein des Ruhesignals G angezeigt. Die Zeitverzögerung dieser Auswertung ist jedoch hoch, da das erste Bandpassfilter 4 auf Grund seiner schmalen Durchlasscharakteristik eine hohe Laufzeit aufweist.

Das Patent US 4056838 zeigt ein derartiges enges Bandpassfilter zur Filterung eines Ruhesignals und zur Bestimmung eines Geräuschabstandes in einem Frequenz-Umtast (FSK) System. US 4112476 schliesslich zeigt ein Distanzschutzsystem mit zwei Fernauslösegeräten.

Darstellung der Erfindung

Es ist deshalb Aufgabe der Erfindung, ein Verfahren und einen Empfänger zur Detektion eines Ruhesignals in einem Fernauslösegerät der eingangs genannten Art zu schaffen, welche eine verbesserte Detektion des Ruhesignals erlauben.

Diese Aufgabe lösen ein Verfahren und ein Empfänger zur Detektion eines Ruhesignals in einem Fernauslösegerät mit den Merkmalen der Patentansprüche 1 und 6.

Im erfindungsgemässen Verfahren zur Detektion eines Ruhesignals in einem Fernauslösegerät, in welchem mindestens ein Befehlssignal durch Filterung eines Empfangssignals mit einem Bandpassfilter und durch Detektion mittels eines Signaldetektors anhand des bandpassgefilterten Empfangssignals detektiert wird, umfasst also eine Durchlasscharakteristik des Bandpassfilters auch einen Frequenzbereich des Ruhesignals, und wird das Ruhesignal anhand des mit dem Bandpassfilter gefilterten Empfangssignals detektiert.

Dadurch ist nicht mehr erforderlich, dass das Ruhesignal zur Detektion durch ein relativ schmales Bandpassfilter, welches nur den Frequenzbereich des Ruhesignals umfasst, gefiltert werden muss. Dementsprechend ist eine Filterlaufzeit und damit eine Verzögerung der Detektion des Ruhesignals kleiner.

Es zeigt sich, dass das Ruhesignal, auch wenn es mit Betriebsdaten moduliert ist und dadurch seine Phase oder Frequenz zeitlich ändert, ohne Verwendung eines Gleichrichters zuverlässig detektiert werden kann. Es ist sogar eine verlässlichere und/oder sicherere Detektion als mit dem bisherigen Verfahren möglich, da auf Grund des Wegfalles des Gleichrichters nicht nur die Amplitude, sondern auch die Phase des Ruhesignals ausgewertet werden kann.

Der erfindungsgemässe Empfänger zur Detektion eines Ruhesignals in einem Fernauslösegerät weist ein Bandpassfilter zur Filterung des Empfangssignals und mindestens einen Signaldetektor zur Detektion mindestens eines Befehlssignals anhand des bandpassgefilterten Empfangssignals auf, wobei eine Durchlasscharakteristik des Bandpassfilters einen Frequenzbereich des Ruhesignals umfasst, und der Empfänger einen Ruhesignaldetektor zur Detektion des Ruhesignals anhand des mit dem Bandpassfilter gefilterten Empfangssignals aufweist.

In einer bevorzugten Ausführungsform der Erfindung geschieht die Detektion der Befehlssignale und/oder des Ruhesignals mittels Korrelation der bandpassgefilterten Signals mit einem jeweiligen Referenzsignal.

Weitere bevorzugte Ausführungsformen gehen aus den abhängigen Patentansprüchen hervor.

Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:

Figur 1     schematisch einen Verlauf von Schutzsignalen im Frequenzbereich und im Zeitbereich;
Figur 2     ein Signalflussbild einer Auswertung von Schutzsignalen gemäss dem Stand der Technik;
Figur 3     ein Signalflussbild einer Auswertung von Schutzsignalen gemäss der Erfindung; und
Figur 4     eine Anordnung von Schutzsignalen im Frequenzbereich gemäss der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

Wege zur Ausführung der Erfindung

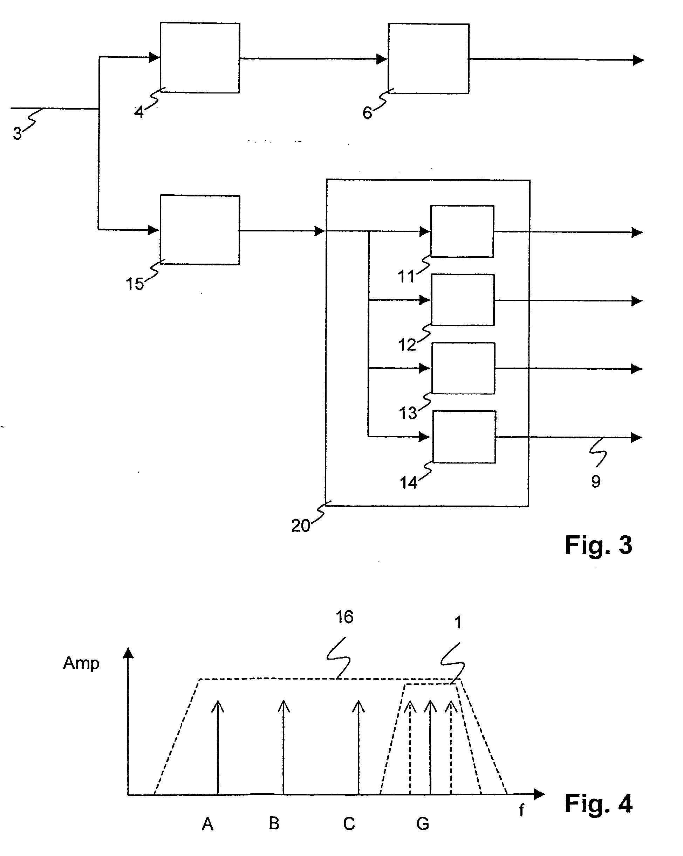

Figur 3 zeigt ein Signalflussbild einer Auswertung von Schutzsignalen gemäss der Erfindung. Ein Empfangssignaleingang 3 führt auf ein erstes Bandpassfilter 4 und auf ein drittes Bandpassfilter 15. Ein Ausgang des ersten Bandpassfilters 4 führt auf einen Datendecoder 6 zur Ermittlung von Betriebsdaten. Ein Ausgang des dritten Bandpassfilters 15 führt auf einen kombinierten Detektor 20. Der kombinierte Detektor 20 weist mehrere Signaldetektoren 11,12,13,14 auf, die alle den Ausgang des dritten Bandpassfilters 15 als Eingang aufweisen. Von den Signaldetektoren 11,12,13,14 sind ein erster Signaldetektor 11, ein zweiter Signaldetektor 12 und ein dritter Signaldetektor 13 zur Detektion von Befehlssignalen A,B,C ausgebildet, und ein vierter Signaldetektor oder Ruhesignaldetektor 14 ist zur Detektion des Ruhesignals G ausgebildet. Wenn mehr Befehlssignale auf weiteren Frequenzen detektiert werden müssen, werden entsprechend mehr Signaldetektoren benötigt.

Figur 4 zeigt eine Anordnung von Schutzsignalen im Frequenzbereich gemäss der Erfindung. Es sind schematisch Frequenzen von Befehlssignalen A,B,C sowie eine erste Durchlasscharakteristik 1 des ersten Bandpassfilters 4 und eine dritte Durchlasscharakteristik 16 des dritten Bandpassfilters 15 angegeben. Die dritte Durchlasscharakteristik 16 des dritten Bandpassfilters 15 umfasst sowohl Frequenzen der Befehlssignale A,B,C als auch des Ruhesignals G.

Eine Bandbreite des drittes Bandpassfilter 15 ist insbesondere grösser als eine Bandbreite des ersten Bandpassfilters 4. Dadurch ist eine Signallaufzeit respektive Auswerteverzögerung bei Verwendung des dritten Bandpassfilters 15 entsprechend geringer und beschleunigt die Detektion des Ruhesignals G im Vergleich zum Stand der Technik.

Ein weiterer Vorteil der Erfindung ergibt sich daraus, dass das Ruhesignal G nicht mehr ausserhalb der Bandbreite eines zweiten Bandpassfilters 5 gemäss dem Stand der Technik liegen muss, welches nur die Befehlssignale A, B,C durchlässt. Dadurch kann es im Frequenzbereich näher bei den Befehlssignalen A,B,C angeordnet werden und wird die gesamte benötigte Bandbreite für die Übertragung aller Signale verringert.

In einer bevorzugten Ausführungsform der Erfindung sind die Befehlssignale A,B,C und das Ruhesignal G in einem gleichmässigen Frequenzraster angeordnet sind, das heisst, im Frequenzbereich weisen jeweils benachbarte Signale den gleichen Frequenzabstand auf. Dadurch wird es möglich, dass die Signaldetektoren 11,12,13,14 unter Einschluss des Ruhesignaldetektors 14 orthogonal zueinander ausgelegt werden können.

Die Signaldetektoren 11,12,13,14 sind je darauf ausgelegt, ein Vorhandensein einer periodischen Schwingung einer bestimmten Frequenz in einem Analogsignal zu detektieren. Wirkungsprinzipien von solchen Eintondetektoren sind allgemein bekannt. In einer bevorzugten Ausführungsform der Erfindung geschieht die Detektion mittels eines Korrelators: Dabei wird das empfangene Signal während eines Zeitfensters konstanter Länge in einem ersten Korrelator mit einem Referenzsignal mit der Frequenz des zu detektierenden Signals korreliert, und in einem zweiten Korrelator mit dem um 90° phasenverschobenen Referenzsignal. Ausgangssignale der beiden Korrelatoren werden quadriert und zu einem Summensignal addiert. Dieses Summensignal entspricht einem phasenunabhängigen Anteil des zu detektierenden Signals am empfangenen Signal, also einer inkohärenten Demodulation. Das Summensignal wird in einem Komparator mit einem Schwellwert verglichen. Durch den Ausgang des Komparators wird bei ausreichender Amplitude des Summensignals die Detektion eines Signals angezeigt. Die Übertragungszeit oder Signalauswertezeit des Detektors ist gleich der Länge des Zeitfensters der beiden Korrelatoren. Typischerweise beträgt die Länge des Zeitfensters 5ms bis 15ms. Bei beispielsweise einer Länge von 5ms und einem Frequenzabstand der Signale entsprechend dem Kehrwert der Länge, also von 200Hz, ist die oben angesprochene Orthogonalität der Detektion gewährleistet.

In einer bevorzugten Ausführungsform der Erfindung geschieht die Detektion mittels eines signalangepassten Filters (matched Filter). Ein signalangepasster Filter dient zur Detektion, also zur Bestimmung eines Vorhandenseins respektive einer Abwesenheit eines bestimmten vorgegebenen Signals. Der Frequenzgang eines signalangepassten Filters ist an das Frequenzspektrum des zu detektierenden Signals angepasst. Eine Filterung mit einem signalangepassten Filter entspricht einer Korrelation mit dem zu detektierenden Signal und erzielt eine maximale Geräuschunterdrückung. Der Korrelator berechnet

$$y(t) = \int s(t-u) \ x(t-u) \ du$$

der signalangepasste Filter berechnet

$$y(t) = \int h(u) \ x(t-u) \ du$$

wobei *h(t)* eine Stossantwort des signalangepassten Filters und *s(t)* das Korrelationssignal ist. Wenn *s(t)* periodisch mit einer Periodendauer *T* ist und der signalangepasste Filter derart ist, dass *h(u) = s(-u)*, dann ist der Ausgang des signalangepassten Filters zu den Zeitpunkten *t* = *n•T,* wobei *n* ganzzahlig ist, mit dem Ausgang des Korrelators identisch.

Eine Frequenzvariation des Ruhesignals G bei Modulation durch Frequenzumtastung oder Phasenumtastung darf die Detektion der Befehlssignale A,B,C nicht merkbar beeinflussen. Vorzugsweise ist deshalb eine Variation der Frequenz des Ruhesignals G um maximal ein Drittel eines Abstands zur Frequenz des nächstliegenden Befehlssignals zugelassen. Beträgt beispielsweise dieser Abstand 120 Hz, so kann das Ruhesignal G um plus oder minus 40 Hz von seiner Nominalfrequenz abweichen.

Die Elemente des erfindungsgemässen Empfängers, welche den Signalfluss gemäss Figur 3 realisieren, werden vorzugsweise durch eine entsprechend programmierte Datenverarbeitungseinheit oder durch anwendungs-spezifische integrierte Schaltungen (ASICs, FPGAs) realisiert. Sie sind aber auch durch analoge Bauelemente und/oder in Kombinaten mit diskreten Logikelementen und/oder programmierten Schaltkreisen implementierbar. In einer bevorzugten Ausführungsform der Erfindung ist der Empfänger mittels eines entsprechend programmierten digitalen Signalprozessors implementiert.

Ein Computerprogramm zur Detektion eines Ruhesignals in einem Fernauslösegerät gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt ein computerlesbares Medium auf, auf welchem die Computerprogrammcodemittel gespeichert sind.

Durch die Verwendung eines erfindungsgemässen Verfahrens und Empfängers wird also die Auswertezeit, bis ein Ruhesignal G, nachdem es durch den Sender gesendet wurde, beim Empfänger detektiert wird, verkleinert. Gleichzeitig wird die Qualität der Detektion verbessert.

Bezugszeichenliste

| | |
|---|---|
| 1 | Durchlasscharakteristik eines ersten Bandpassfilters |
| 2 | Durchlasscharakteristik eines zweiten Bandpassfilters |
| 3 | Empfangssignaleingang |
| 4 | erstes Bandpassfilter |
| 5 | zweites Bandpassfilter |
| 6 | Datendecoder |
| 7 | Gleichrichter |
| 8 | Komparator |
| 9 | Ruhesignalausgang |
| 10 | Befehlsdetektor |
| 11 | erster Signaldetektor |
| 12 | zweiter Signaldetektor |
| 13 | dritter Signaldetektor |
| 14 | vierter Signaldetektor, Ruhesignaldetektor |
| 15 | drittes Bandpassfilter |
| 16 | Durchlasscharakteristik eines dritten Bandpassfilters |
| 20 | kombinierter Detektor |
| A,B,C | Befehlssignale |
| G | Ruhesignal |
| Amp | Amplitudenachse |
| f | Frequenzachse |
| t | Zeitachse |

**Patentansprüche**

1. Verfahren zur Detektion eines Ruhesignals (G) in einem Fernauslösegerät, mittels welchem Fernauslösegerät in einem Empfangssignal ein Ruhesignal und mindestens ein Befehlssignal (A,B,C) detektierbar ist, wobei das Ruhesignal zur Übermittlung von Betriebsdaten moduliert ist, und wobei das mindestens eine Befehlssignal (A,B,C) durch Filterung des Empfangssignals mit einem Bandpassfilter (15) und Detektion mittels eines Signaldetektors (11,12,13) anhand des bandpassgefilterten Empfangssignals detektiert wird, **dadurch gekennzeichnet, dass** eine Durchlasscharakteristik (16) des Bandpassfilters (15) einen Frequenzbereich des Ruhesignals (G) umfasst, und dass das Ruhesignal (G) anhand des mit dem Bandpassfilter (15) gefilterten Empfangssignals detektiert wird.

2. Verfahren gemäss Anspruch 1, **dadurch gekennzeichnet, dass** die Signaldetektoren (11,12,13,14) die Detektion mittels Korrelation des bandpassgefilterten Empfangssignals mit jeweiligen Referenzsignalen durchführen.

3. Verfahren gemäss Anspruch 1, **dadurch gekennzeichnet, dass** die Signaldetektoren (11,12,13,14) die Detektion mittels eines signalangepassten Filters (Matched Filter) durchführen.

4. Verfahren gemäss Anspruch 1, **dadurch gekennzeichnet, dass** die Befehlssignale (A,B,C) und das Ruhesignal (G) in einem gleichmässigen Frequenzraster angeordnet sind.

5. Verfahren gemäss Anspruch 1, **dadurch gekennzeichnet, dass** das Empfangssignal mittels eines weiteren Bandpassfilters (4) gefiltert wird und anhand des derart gefilterten Signals mittels eines Datendecoders (6) die Betriebsdaten ermittelt werden.

6. Empfänger zur Detektion eines Ruhesignals (G) in einem Fernauslösegerät, mittels welchem Fernauslösegerät in einem Empfangssignal ein Ruhesignal und mindestens ein Befehlssignal (A,B,C) detektierbar ist, wobei das Ruhesignal zur Übermittlung von Betriebsdaten moduliert ist, und wobei der Empfänger ein Bandpassfilter (15) zur Filterung des Empfangssignals und mindestens einen Signaldetektor (11,12,13) zur Detektion des mindestens einen Befehlssignals (A,B,C) anhand des bandpassgefilterten Empfangssignals aufweist, **dadurch gekennzeichnet, dass** eine Durchlasscharakteristik (16) des Bandpassfilters (15) einen Frequenzbereich des Ruhesignals (G) umfasst, und dass der Empfänger einen Ruhesignaldetektor (14) zur Detektion des Ruhesignals (G) anhand des mit dem Bandpassfilter (15) gefilterten Empfangssignals aufweist.

7. Empfänger gemäss Anspruch 6, **dadurch gekennzeichnet, dass** die Signaldetektoren (11,12,13,14) zur Detektion eines Signals mittels Korrelation des bandpassgefilterten Empfangssignals mit jeweiligen Referenzsignalen ausgebildet sind.

8. Empfänger gemäss Anspruch 6, **dadurch gekennzeichnet, dass** die Signaldetektoren (11,12,13,14) zur Detektion eines Signals mittels eines signalangepassten Filters (Matched Filter) ausgebildet sind.

9. Empfänger gemäss Anspruch 6, **dadurch gekennzeichnet, dass** die Befehlssignale (A,B,C) und das Ruhesignal (G) in einem gleichmässigen Frequenzraster angeordnet sind.

10. Empfänger gemäss Anspruch 6, **dadurch gekennzeichnet, dass** der Empfänger ein weiteres Bandpassfilter (4) zur Filterung des Empfangssignals und einen Datendecoder (6) zur Ermittlung der Betriebsdaten anhand des derart gefilterten Signals aufweist.

**Claims**

1. Method for detection of a quiescent signal (G) in a remote tripping device, by means of which remote tripping device a quiescent signal and at least one command signal (A, B, C) can be detected in a received signal, with the quiescent signal being modulated in order to transmit operating data, and with the at least one command signal (A, B, C) being detected on the basis of the bandpass-filtered received signal by filtering of the received signal using a bandpass filter (15) and detection by means of a signal detector (11, 12, 13), **characterized in that** a passband characteristic (16) of the bandpass filter (15) covers a frequency range of the quiescent signal (G), and in that the quiescent signal (G) is detected on the basis of the received signal which has being filtered by the bandpass filter (15).

2. Method according to Claim 1, **characterized in that** the signal detectors (11, 12, 13, 14) carry out the detection process by means of correlation of the bandpass-filtered received signal with respective reference signals.

3. Method according to Claim 1, **characterized in that** the signal detectors (11, 12, 13, 14) carry out the detection process by means of a matched filter.

4. Method according to Claim 1, **characterized in that** the command signals (A, B, C) and the quiescent signal (G) are arranged in a uniform frequency pattern.

5. Method according to Claim 1, **characterized in that** the received signal is filtered by means of a further bandpass filter (4), and the operating data is determined by means of a data decoder (6) on the basis of the signal which has been filtered in this way.

6. Receiver for detection of a quiescent signal (G) in a remote tripping device, by means of which remote tripping device a quiescent signal and at least one command signal (A, B, C) can be detected in a received signal, with the quiescent signal being modulated for transmission of operating data, and with the receiver having a bandpass filter (15) for filtering of the received signal, and at least one signal detector, (11, 12, 13) for detection of the at least one command signal (A, B, C) on the basis of the bandpass-filtered received signal, **characterized in that** a passband characteristic (16) of the bandpass filter (15) covers a frequency range of the quiescent signal (G) and in that the receiver has a quiescent signal detector (14) for detection of the quiescent signal (G) on the basis of the received signal which has been filtered by the bandpass filter (15).

7. Receiver according to Claim 6, **characterized in that** the signal detectors (11, 12, 13, 14) are designed to detect a signal by means of correlation of the bandpass-filtered received signal with respective reference signals.

8. Receiver according to Claim 6, **characterized in that** the signal detectors (11, 12, 13, 14) are designed to detect a signal by means of a matched filter.

9. Receiver according to Claim 6, **characterized in that** the command signals (A, B, C) and the quiescent signal (G) are arranged in a uniform frequency pattern.

10. Receiver according to Claim 6, **characterized in that** the receiver has a further bandpass filter (4) for filtering the received signal, and a data decoder (6) for determining the operating data on the basis of the signal which has been filtered in this way.

**Revendications**

1. Procédé de détection d'un signal de repos (G) dans un dispositif de déclenchement à télécommande, au moyen duquel dispositif de déclenchement à télécommande il est possible de détecter dans un signal de réception, un signal de repos et au moins un signal de commande (A, B, C), le signal de repos étant modulé pour transmettre des données de fonctionnement, et le signal de commande (A, B, C) au moins étant détecté par filtrage du signal de réception avec un filtre passe-bande (15) et détection au moyen d'un détecteur de signal (11, 12, 13) à l'aide du signal de réception filtré par le filtre passe-bande, **caractérisé en ce qu'**une caractéristique de transmission (16) du filtre passe-bande (15) englobe une plage de fréquence du signal de repos (G) et **en ce que** le signal de repos (G) est détecté à l'aide du signal de réception filtré par le filtre passe-bande (15).

2. Procédé selon la revendication 1, **caractérisé en ce que** les détecteurs de signaux (11, 12, 13, 14) effectuent la détection au moyen de la corrélation du signal de réception filtré par le filtre passe-bande avec des signaux de référence correspondants.

3. Procédé selon la revendication 1, **caractérisé en ce que** les détecteurs de signaux (11, 12, 13, 14) effectuent la détection au moyen d'un filtre adapté au signal ("matched filter").

4. Procédé selon la revendication 1, **caractérisé en ce que** les signaux de commande (A, B, C) et le signal de repos (G) sont disposés dans une trame de fréquence régulière.

5. Procédé selon la revendication 1, **caractérisé en ce que** le signal de réception est filtré au moyen d'un autre filtre passe-bande (4) et **en ce que** les données de fonctionnement sont déterminées à l'aide du signal ainsi filtré au moyen d'un décodeur de données (6).

6. Récepteur de détection d'un signal de repos (G) dans un dispositif de déclenchement à télécommande, au moyen duquel dispositif de déclenchement à télécommande il est possible de détecter dans un signal de réception, un signal de repos et au moins un signal de commande (A, B, C), le signal de repos étant modulé pour transmettre des données de fonctionnement, et le récepteur possédant un filtre passe-bande (15) pour filtrer le signal de réception et au moins un détecteur de signal (11, 12, 13) pour la détection d'au moins un signal de commande (A, B, C) à l'aide du signal de réception filtré par le filtre passe-bande, **caractérisé en ce qu'**une caractéristique de transmission (16) du filtre passe bande (15) englobe une plage de fréquence du signal de repos (G) et **en ce que** récepteur possède un détecteur de signal de repos (14) pour la détection du signal de repos (G) à l'aide du signal de réception filtré par le filtre passe-bande (15).

7. Récepteur selon la revendication 6, **caractérisé en ce que** les détecteurs de signaux (11, 12, 13, 14) sont conçus pour la détection d'un signal au moyen de la corrélation du signal de réception filtré par le filtre passe-bande avec des signaux de référence correspondants.

8. Récepteur selon la revendication 6, **caractérisé en ce que** les détecteurs de signaux (11, 12, 13, 14) sont conçus pour la détection d'un signal au moyen d'un filtre adapté au signal ("matched filter").

9. Récepteur selon la revendication 6, **caractérisé en ce que** les signaux de commande (A, B, C) et le signal de repos (G) sont disposés dans une trame de fréquence régulière.

**10.** Récepteur selon la revendication 6, **caractérisé en ce que** le récepteur possède un autre filtre passe-bande (4) pour le filtrage du signal de réception et un décodeur de données (6) pour déterminer les données de fonctionnement à l'aide du signal ainsi filtré.

**Fig. 1**

**Fig. 2**

**Fig. 3**

**Fig. 4**